# EUROPÄISCHE PATENTANMELDUNG

(11) **EP 2 181 587 A2**
(43) Veröffentlichungstag der Anmeldung: **05.05.2010**
(21) Anmeldenummer: 09174019.1
(22) Anmeldetag: 26.10.2009
(51) Int. Cl.: A01K 15/02

(54) **Trainingsgerät zum Trainieren von Hunden**

(30) Priorität: 29.10.2008 CH 16982008
(71) Anmelder: Stephanie, Michel, 4922 Thunstetten (CH)
(72) Erfinder: Stephanie, Michel, 4922 Thunstetten (CH)
(74) Vertreter: BOVARD AG

(57) **Zusammenfassung**

Ein Trainingsgerät zum Trainieren von Hunden besteht aus einem Beutel (1) für die Aufnahme von Trockenfutter, welcher Beutel (1) aus einem doppellagigen Gewebe gebildet ist, welches über Verbindungsnähe (7) verbunden ist und welcher Beutel (1) mit einer zu öffnenden und wieder schliessbaren Verschlusseinrichtung (9) ausgestattet ist. Das Gewebe ist ein widerstandsfähiges, wasserundurchlässiges Gewebe, die Verbindungsnähte (7) sind wasserundurchlässig abgedichtet und die Verschlusseinrichtung ist wasserundurchlässig verschliessbar. Dadurch kann dieses Trainingsgerät zum Apportieren auch ins Wasser geworfen werden, das im Beutel (1) enthaltene Trockenfutter ist geschützt.

## Beschreibung

Die vorliegende Erfindung bezieht sich auf ein Trainingsgerät zum Trainieren von Hunden, bestehend aus einem Beutel für die Aufnahme von Trockenfutter, welcher Beutel aus einem doppellagigen Gewebe gebildet ist, welches über Verbindungsnähte verbunden und welcher Beutel mit einer zu öffnenden und wieder schliessbaren Verschlusseinrichtung ausgestattet ist.

Zur Schulung und Erziehung gehört auch das Apportieren. Hierzu wird vom Hundehalter ein Gegenstand weggeworfen, der Hund soll diesen Gegenstand suchen und dem Hundehalter zurückbringen.

Um dem Hund diese Apportierübung möglichst schmackhaft zu machen und ihn nach erfüllter Aufgabe belohnen zu können, sind Trainingsgeräte bekannt, die als Beutel ausgebildet sind, in welche Beutel Trockenfutter untergebracht werden kann, und welche Beutel dann zum Apportieren ins Gelände geschleudert werden können. Vor dem Wegschleudern wird, für den Hund sichtbar, dieses Trockenfutter in den Beutel gegeben, um dem Hund einen Anreiz zu geben, diesen Gegenstand zurückzuholen. Nach dem Zurückholen kann dieser Beutel geöffnet werden und ein Futterstück entnommen werden, mit welchem der Hund für die erbrachte Leistung belohnt wird.

Derartige Trainingsgeräte sind in vielfältiger Weise bekannt. Diese weisen unterschiedliche Formen auf, um beispielsweise die Flugeigenschaften zu verbessern, sie sind zum Teil auch mit Schleuderbändern versehen, um das Gerät möglichst weit wegschleudern zu können.

Alle diese Trainingsgeräte weisen aber den Nachteil auf, dass sie nicht geeignet sind, auch im Wasser angewendet werden zu können. Vielfach ist es aber auch so, dass ein Hund darauf trainiert werden soll, dass er auch irgendeinen Gegenstand, der beispielsweise in ein Gewässer fällt, herausholen soll.

Die Aufgabe der vorliegenden Erfindung besteht somit darin, ein Trainingsgerät zum Trainieren von Hunden zu schaffen, mit welchem das Apportieren auch aus einem Gewässer geübt werden kann.

Erfindungsgemäss erfolgt die Lösung dieser Aufgabe dadurch, dass der Beutel aus einem Gewebe geschaffen ist, welches ein widerstandsfähiges, wasserundurchlässiges Gewebe ist und deren Verbindungsnähte wasserundurchlässig abgedichtet sind, und die Verschlusseinrichtung wasserundurchlässig verschliessbar ist.

Ein derartiger Beutel kann mit Trockenfutter gefüllt werden, nach dem Verschliessen des Beutels kann dieser ohne weiteres auch ins Wasser geworfen werden, der Beutel schwimmt durch die neben dem Hundefutter eingeschlossene Luft auf der Wasseroberfläche, es kann kein Wasser eindringen, das Trockenfutter wird nicht durchnässt. Durch die Verwendung eines widerstandsfähigen Materials wird dieser Beutel auch nicht durch die Zähne des Hundes beschädigt.

Geeignet für die Herstellung eines derartigen Trainingsgerätes ist beispielsweise ein abriebfestes und reissfestes Gewebe aus Polyamid, das unter der Bezeichnung "Cordura" von der Firma Dupont vertrieben wird. Dieses Gewebe ist beschichtet und somit wasserundurchlässig, dieses Gewebe kann auch mit Nähmaschinen genäht werden, wobei diese Nähte in bekannter Weise zum Beispiel mit einem Nahtdichtband oder mit einer Dichtmasse abgedichtet werden können. Selbstverständlich können aber auch andere geeignete Materialien zur Herstellung eines derartigen Beutels verwendet werden.

In vorteilhafter Weise besteht das doppellagige Gewebe aus einem Gewebestück, welches einmal gefaltet ist und eine obere Gewebelage und eine untere Gewebelage bildet, dessen Seitenränder miteinander verbunden sind und an dessen dem Falt gegenüberliegenden offenen Seite die Verschlusseinrichtung angebracht ist. Dadurch lässt sich auf sehr einfache und günstige Weise ein derartiger Beutel herstellen.

In vorteilhafter Weise ist mindestens eine der beiden Gewebelagen innenseitig mit einer Schaumstoffschicht bezogen, was den Schwimmauftrieb dieses Gerätes verbessert.

In vorteilhafter Weise ist die Verschlusseinrichtung aus einem Haftverschluss gebildet, dessen einer Streifen am Randbereich entlang der offenen Seite auf der äusseren Oberfläche der unteren Gewebelage des Beutels angebracht ist, dessen anderer Streifen auf der äusseren Oberfläche der oberen Gewebelage des Beutels angebracht ist und von der offenen Seite mindestens um die doppelte Breite der Haftstreifen beabstandet ist, so dass durch zweimaliges Umschlagen des Randbereichs die beiden Haftstreifen aufeinander zu liegen kommen und die offene Seite verschlossen ist. Dadurch wird auf sehr einfache Weise eine wasserdichte Verschlusseinrichtung geschaffen, welche auch einfach handhabbar ist.

Eine weitere vorteilhafte Ausgestaltung der Erfindung besteht darin, dass im Bereich der Öffnung die untere Gewebelage über die obere Gewebelage vorstehend ist und einen Lappen bildet, welcher Lappen über die obere Gewebelage zurückfaltbar ist. Dadurch wird bei der Verschlusseinrichtung eine zusätzliche Dichtung gegen das Eindringen von Wasser erhalten, was vorteilhaft sein kann, wenn beispielsweise der Haftverschluss nicht gut verschlossen ist.

Um den zurückgefalteten Lappen in der korrekten Position zu halten, ist dieser im Bereich der Seitenränder durch die Verbindungsnähte fixiert ist.

Eine andere Ausgestaltung der Erfindung besteht darin, dass die Verschlusseinrichtung durch einen Klemmleistenverschluss gebildet ist, welcher sich über die gesamte Länge der offenen Seite erstreckt. Dieser Klemmleistenverschluss, der auch als Druckverschluss bezeichnet wird, gewährleistet ein wasserdichtes Verschliessen dieses Beutels.

In vorteilhafter Weise ist die untere Gewebelage im Bereich der Öffnung über die obere Gewebelage vorstehend und bildet einen Umschlaglappen, welcher über die Öffnung umschlagbar ist. Dadurch kann die Verschlusseinrichtung vor den zubeissenden Zähnen des Hundes geschützt werden.

In vorteilhafter Weise ist der Umschlaglappen mittels eines Klettverschlusses in der umgeschlagenen Position fixierbar, wodurch gewährleistet ist, dass der Umschlaglappen seine Schutzfunktion vollumfänglich erfüllen kann, gleichzeitig ist aber die Handhabung zum Öffnen dieses Beutels einfach.

Ausführungsformen der Erfindung werden nachfolgend anhand der beiliegenden Zeichnung beispielhaft näher erläutert.

Es zeigt
Fig. 1 in räumlicher Darstellung ein erstes Ausführungsbeispiel eines erfindungsgemässen Trainingsgeräts im geöffneten Zustand;
Fig. 2 eine Seitenansicht auf das Trainingsgerät gemäss Fig. 1;
Fig. 3 eine schematische Darstellung der Seitenansicht des Trainingsgeräts gemäss Fig. 2 im geschlossenen Zustand;
Fig. 4 eine Schnittdarstellung des Trainingsgeräts entlang Linie IV-IV gemäss Fig. 1;
Fig. 5 in schematischer Darstellung eine Seitenansicht einer weiteren Ausführungsform eines erfindungsgemässen Trainingsgeräts im geöffneten Zustand;
Fig. 6 eine vergrösserte Darstellung der Verschlusseinrichtung des Trainingsgerätes gemäss Fig. 5;
Fig. 7 eine Seitenansicht des Trainingsgerätes gemäss Fig. 5, im geschlossenen Zustand; und
Fig. 8 eine vergrösserte Darstellung der Verschlusseinrichtung des Trainingsgerätes gemäss Fig. 7.

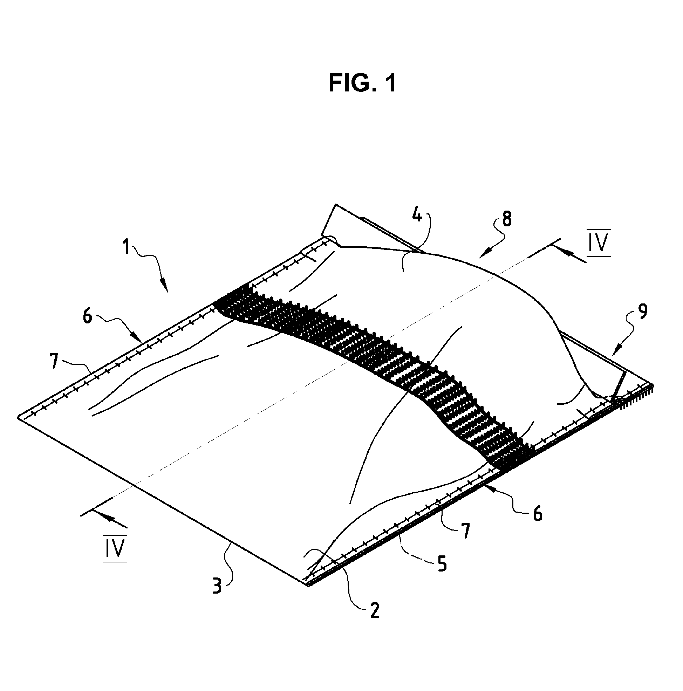

Das in Fig. 1 dargestellte Trainingsgerät für Hunde besteht aus einem Beutel 1, welcher aus einem doppellagigen Gewebe gebildet ist. Dieses doppellagige Gewebe besteht aus einem Gewebestück 2, welches um den Falt 3 gefaltet ist und eine obere Gewebelage 4 und eine untere Gewebelage 5 bildet. Die obere Gewebelage 4 und die untere Gewebelage 5 sind an den jeweiligen Seitenrändern 6 miteinander verbunden, was über durch Nähen erhaltene Verbindungsnähte 7 erreichbar ist. An der dem Falt 3 gegenüberliegenden offenen Seite 8 des Beutels ist die Verschlusseinrichtung 9 angebracht, die später noch im Detail beschrieben wird.

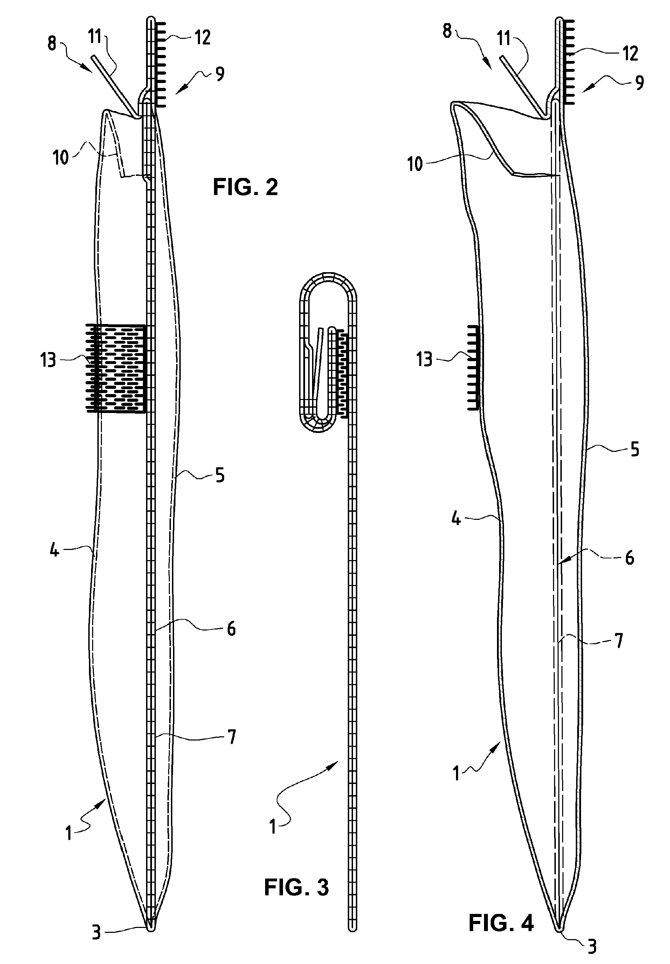

Aus der Fig. 2 und der Fig. 4 ist eine Seitenansicht bzw. eine Schnittdarstellung eines geöffneten Beutels 1 dargestellt. Zwischen der oberen Gewebelage 4 und der unteren Gewebelage 5 entsteht ein Hohlraum, in welchem durch die offene Seite 8 das Trockenfutter in den Beutel gebracht werden kann. Wie aus diesen beiden Figuren ersichtlich ist, weist das der offenen Seite 8 des Beutels 1 zugewandte Seite der oberen Gewebelage 4 einen umgeschlagenen Bereich 10 auf, an den Seitenrändern 6 ist dieser umgeschlagene Bereich 10 durch die Verbindungsnähte 7 mit der oberen Gewebelage 4 und der unteren Gewebelage 5 verbunden. Die Innenseite der oberen Gewebelage 4 und/oder der unteren Gewebelage kann in bekannter, nicht dargestellter Weise mit einer Schicht aus Schaumstoff ausgekleidet sein, was die Schwimmfähigkeit des Beutels erhöht.

Im Bereich der offenen Seite 8 des Beutels 1 ist die untere Gewebelage 5 über die obere Gewebelage 4 vorstehend und bildet einen Lappen 11. Dieser Lappen 11 ist mindestens in der verschlossenen Position des Beutels 1 über die obere Gewebelage 4 zurückgefaltet. Im Bereich der Seitenränder 6 kann dieser Lappen 11 in dieser Position durch Vernähen fixiert sein, wobei sich diese Fixierung nur über einen Teil der Länge des Lappens 11 erstreckt, wie aus diesen beiden Figuren ersichtlich ist.

Zur Bildung der Verschlusseinrichtung ist der eine Streifen 12 eines Haftverschlusses am Randbereich entlang der offenen Seite auf der äusseren Oberfläche der unteren Gewebelage 5 des Beutels 1 befestigt, was durch Nähen oder Kleben erfolgen kann. Der andere Streifen 13 ist auf der äusseren Oberfläche der oberen Gewebelage 4 des Beutels 1 angebracht, wobei dieser von der offenen Seite 8 mindestens um die doppelte Breite der beiden Streifen 12 bzw. 13 beabstandet ist.

Zum Verschliessen des Beutels 1, was beispielsweise nach dem Auffüllen mit Trockenfutter für den Hund erfolgen kann und bevor dieser Beutel zum Apportieren weggeworfen wird, wird im Bereich der offenen Seite 8 die obere Gewebelage 4 mit dem umgeschlagenen Bereich 10 auf die untere Gewebelage 5 gedrückt, der Lappen 11 wird über die obere Gewebelage 4 gelegt, die untere Gewebelage 5 mit dem einen Haftstreifen 12 wird ein erstes Mal umgeschlagen, so dass der eine Streifen 12 auf die obere Gewebelage 4 und den umgeschlagenen Bereich 10 zu liegen kommt, danach wird der eine Streifen 12 mit der unteren Gewebelage 5 nochmals umgeschlagen, der eine Streifen 12 kommt dann auf den anderen Streifen 13 zu liegen, wie dies aus Fig. 3 ersichtlich ist, die beiden Streifen 12 und 13 können aufeinandergepresst werden, der Beutel 1 ist verschlossen. Als Verschlusseinrichtung 9 kann beispielsweise ein Klettverschluss verwendet werden.

Wie bereits erwähnt worden ist, ist das Gewebestück 2 ein widerstandsfähiges, wasserundurchlässiges Gewebe (z.B. Cordura), sämtliche Verbindungsnähte sind in bekannter Weise wasserundurchlässig abgedichtet, durch das mehrmalige Umfalten des Beutels zum Verschliessen und der Ausgestaltung der offenen Seite dieses Beutels wird auch hier ein wasserdichter Verschluss erhalten. Der Beutel 1 kann ins Wasser geworfen werden, der Hund kann diesen Beutel holen und zurückbringen, der Beutel kann geöffnet werden, dem Hund als Belohnung ein Stück Futter abgegeben werden.

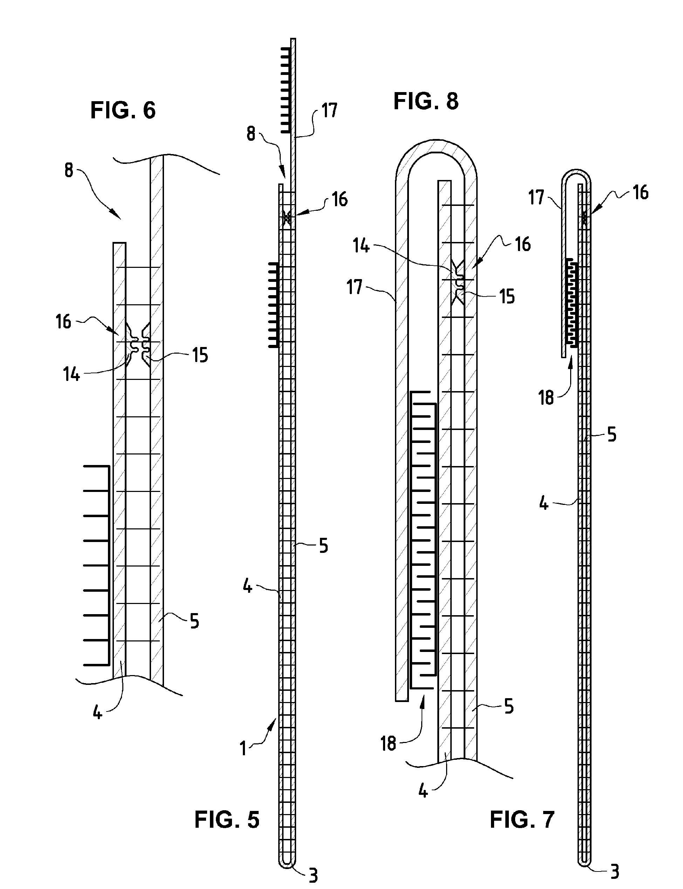

In den Fig. 5 bis 8 ist eine weitere Ausführungsform eines Trainingsgerätes dargestellt. Hierbei besteht der Beutel 1 wiederum aus einem Gewebestück 2, welches um den Falt 3 gefaltet ist, so dass eine obere Gewebelage 4 und eine untere Gewebelage 5 gebildet wird. Diese beiden Gewebelagen sind, wie im vorgängig dargestellten Ausführungsbeispiel beschrieben worden ist, an den Seitenrändern über Verbindungsnähte verbunden, so dass eine offene Seite 8 gebildet wird. Zum Verschliessen dieses Beutels 1 ist auf der Innenseite der oberen Gewebelage 4 und entsprechend auf der Innenseite der unteren Gewebelage 5 jeweils eine Teilleiste 14 bzw. 15 eines Klemmleistenverschlusses 16 angebracht, beispielsweise durch Aufkleben. Diese beiden Teilleisten 14 und 15 erstrecken sich über die gesamte Länge der offenen Seite 8. Dieser Klemmleistenverschluss 16 kann in bekannter Weise, wie insbesondere aus Fig. 8 entnehmbar ist, durch Zusammenpressen der beiden Teilleisten 14, 15 verschlossen werden, die Profile der beiden Teilleisten greifen ineinander, wodurch ebenfalls ein wasserdichtes Verschliessen der offenen Seite 8 des Beutels 1 erhalten wird.

Die untere Gewebelage 5 ist über die obere Gewebelage 4 im Bereich der offenen Seite 8 vorstehend, wodurch ein Umschlaglappen 17 gebildet wird. Dieser Umschlaglappen 17 lässt sich über die offene Seite 8 des Beutels umschlagen, wie dies aus den Fig. 7 und 8 ersichtlich ist, um diesen Umschlaglappen 17 in dieser Position zu halten, ist ein Klettverschluss 18 vorgesehen. Mit diesem über die offene Seite 8 des Beutels 1 umgeschlagenen Umschlaglappen 17 wird der Klemmleistenverschluss 16 vor den Zähnen des Hundes geschützt.

Auch diese Ausführungsform des Beutels 1 besteht aus einem widerstandsfähigen, wasserundurchlässigen Gewebe, welches durch Verbindungsnähte, die entsprechend abgedichtet sind, miteinander verbunden ist. Die Anwendungsweise dieses Ausführungsbeispiels ist identisch, wie beim vorhergehend beschriebenen Ausführungsbeispiel.

Mit diesem einfach herstellbaren, widerstandsfähigen und wasserundurchlässigen Beutel wird ein Trainingsgerät für Hunde geschaffen, welches zum Apportieren weggeworfen werden kann, wobei dieses Trainingsgerät ohne weiteres auch ins Wasser geworfen werden kann. Das in diesem Beutel verpackte Trockenfutter ist hierbei in optimaler Weise geschützt.

## Patentansprüche

1. Trainingsgerät zum Trainieren von Hunden, bestehend aus einem Beutel (1) für die Aufnahme von Trockenfutter, welcher Beutel (1) aus einem doppellagigen Gewebe gebildet ist, welches über Verbindungsnähte (7) verbunden ist und welcher Beutel (1) mit einer zu öffnenden und wieder schliessbaren Verschlusseinrichtung (9) ausgestattet ist, **dadurch gekennzeichnet, dass** das Gewebe ein widerstandsfähiges, wasserundurchlässiges Gewebe ist und die Verbindungsnähte (7) wasserundurchlässig abgedichtet sind und dass die Verschlusseinrichtung (9) wasserundurchlässig verschliessbar ist.

2. Trainingsgerät nach Anspruch 1, **dadurch gekennzeichnet, dass** das doppellagige Gewebe aus einem Gewebestück (2) besteht, welches einmal gefaltet ist und eine obere Gewebelage (4) und eine untere Gewebelage (5) bildet, dessen Seitenränder (6) miteinander verbunden sind und an dessen dem Falt (3) gegenüberliegenden offenen Seite (8) die Verschlusseinrichtung (9) angebracht ist.

3. Trainingsgerät nach Anspruch 2, **dadurch gekennzeichnet, dass** mindestens eine der beiden Gewebelagen (4 oder 5) innenseitig mit einer Schaumstoffschicht bezogen ist.

4. Trainingsgerät nach Anspruch 2 oder 3, **dadurch gekennzeichnet, dass** die Verschlusseinrichtung (9) aus einem Haftverschluss (12, 13) gebildet ist, dessen einer Streifen (12) am Randbereich entlang der offenen Seite (8) auf der äusseren Oberfläche der unteren Gewebelage (5) des Beutels (1) angebracht ist, dessen anderer Streifen (13) auf der äusseren Oberfläche der oberen Gewebelage (4) des Beutels (1) angebracht ist und von der offenen Seite (8) mindestens um die doppelte Breite der Haftstreifen (12; 13) beabstandet, so dass durch zweimaliges Umschlagen des Randbereichs die beiden Haftstreifen (12, 13) aufeinander zu liegen kommen und die offene Seite (8) verschlossen ist.

5. Trainingsgerät nach einem der Ansprüche 2 bis 4, **dadurch gekennzeichnet, dass** im Bereich der Öffnung die untere Gewebelage (5) über die obere Gewebelage (4) vorstehend ist und einen Lappen (11) bildet, welcher Lappen (11) über die obere Gewebelage (4) zurückfaltbar ist.

6. Trainingsgerät nach Anspruch 5, **dadurch gekennzeichnet, dass** der zurückgefaltete Lappen (11) im Bereich der Seitenränder (6) in dieser Position durch die Verbindungsnähte (7) fixiert ist.

7. Trainingsgerät nach einem der Ansprüche 1 bis 3, **dadurch gekennzeichnet, dass** die Verschlusseinrichtung (9) durch einen Klemmleistenverschluss (16) gebildet ist, welcher sich über die gesamte Länge der offenen Seite (8) erstreckt.

8. Trainingsgerät nach Anspruch 7, **dadurch gekennzeichnet, dass** die untere Gewebelage (5) im Bereich der Öffnung über die obere Gewebelage (4) vorstehend ist und einen Umschlaglappen (17) bildet, welcher über die Öffnung umschlagbar ist.

9. Trainingsgerät nach Anspruch 8, **dadurch gekennzeichnet, dass** der Umschlaglappen (17) mittels eines Klettverschlusses (18) in der umgeschlagenen Position fixierbar ist.
